# EUROPEAN PATENT SPECIFICATION

(11) **EP 2 052 387 B1**
(45) Date of publication and mention of the grant of the patent: **23.12.2009**
(21) Application number: 07805267.7
(22) Date of filing: 31.07.2007
(51) Int. Cl.: G11B 20/00, G11B 7/24, G11B 7/0037

(54) **OPTICAL STORAGE MEDIUM WITH LIMITED ACCESS**
OPTISCHES SPEICHERMEDIUM MIT EINGESCHRÄNKTEM ZUGANG
SUPPORT DE STOCKAGE OPTIQUE À ACCÈS LIMITÉ

(30) Priority: 04.08.2006 EP 06118426
(43) Date of publication of application: 29.04.2009
(73) Proprietor: Koninklijke Philips Electronics N.V., 5621 BA Eindhoven (NL)
(72) Inventor: LEE, Juil, NL-5656 AE Eindhoven (NL); KUIPER, Antonius, E., T., NL-5656 AE Eindhoven (NL); VULLERS, Rudolf, J., M., NL-5656 AE Eindhoven (NL); PASQUARIELLO, Donato, NL-5656 AE Eindhoven (NL)
(74) Representative: Uittenbogaard, Frank
(86) International application number: PCT/IB2007/053010
(87) International publication number: WO 2008/015633

(56) References cited:
- EP-A- 0 851 418
- WO-A-2004/031811
- WO-A-2007/054892
- US-A1- 2003 081 521
- US-A1- 2004 037 994
- US-A1- 2005 083 829
- US-A1- 2006 136 948

## Description

### FIELD OF THE INVENTION

The present invention relates to an optical storage medium, to a device for accessing said optical storage medium and to a corresponding method.

### BACKGROUND OF THE INVENTION

Each DVD-Video disc contains one or more region codes, denoting the area(s) of the world in which distribution and playback are intended. The commercial DVD-Video player specification dictates that a player can only play discs that contain its region code. The region code is defined as a single byte, in which each region is assigned to a bit. If the bit is assigned 0 or 1 indicates whether the disc can be played in the specific region. However, on a higher level, every player is assigned to one of 7 regions; during playback the player checks its internal region code with a "RMA"-byte (RMA = region management) on the DVD-Video disc. This RMA-byte is, in fact, an 8-bit mask (if a bit=0, players from the corresponding region may play such disc).The RMA-byte is even recorded twice: once in the lead-in zone (control data zone) and once more in the VMGI_MAT in the file VIDEO_TS.IFO in the datazone. For BD (Blu-ray) region codes have not yet been specified, however, they have lately been requested by some users of BD.

In theory, the use of region codes allows the motion picture studios to control the various aspects of a release (including content, date and price) on a region-by-region basis. The geographical regions are as follows.
REGION 1 -- USA, Canada
REGION 2 -- Japan, Europe, South Africa, Middle East, Greenland
REGION 3 -- S.Korea, Taiwan, Hong Kong, Parts of South East Asia
REGION 4 -- Australia, New Zealand, Latin America (including Mexico)
REGION 5 -- Eastern Europe, Russia, India, Africa
REGION 6 -- China
REGION 7 -- Reserved for Unspecified Special Use
REGION 8 -- Resevered for Cruise Ships, Airlines, etc...
REGION 0 or REGION ALL -- Discs are uncoded and can be played Worldwide.

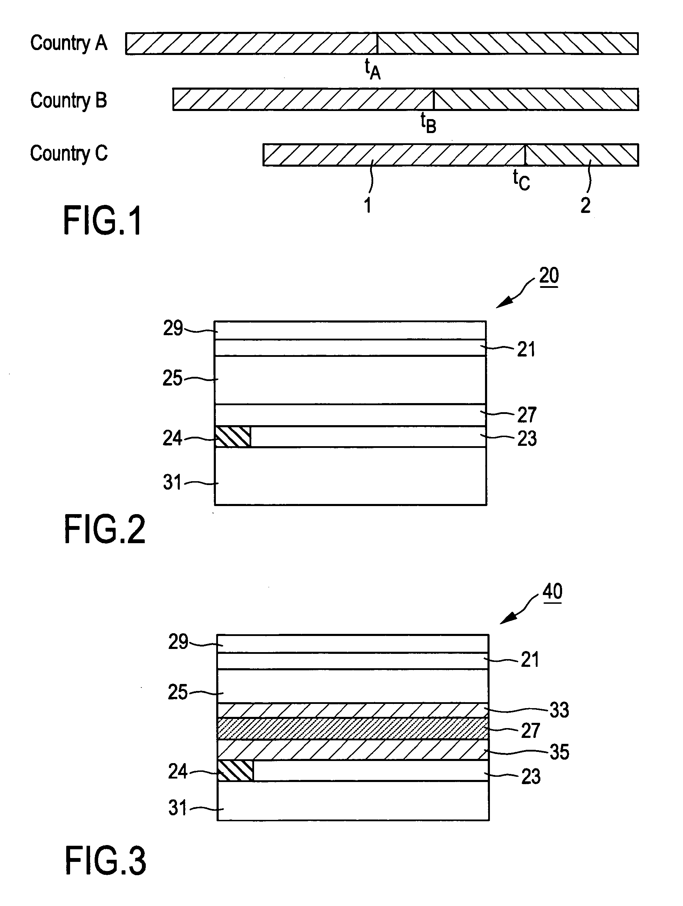

The prime reason for the existence of the region code in DVD-ROM discs can be explained by Fig. 1. Movies are released in theatres in different parts of the world at different times throughout the year. A summer blockbuster in the U.S. may end up being the Christmas blockbuster overseas. In Fig. 1, for instance, the DVD version of a movie is out in the country A at time t_{A}, while it is still shown in theatres in countries B and C. In order to maximize the financial profits from the theatrical distribution of a particular movie, the region code makes it impossible (under normal conditions) to have a friend in country A send a DVD copy of the film to countries B and C where it is in theatrical release and be able to play the DVD on a player there.

The problem here is that the region code, which can be seen as a particular example of limitation data for limiting access to the content, becomes unnecessary when the theatrical distribution of the movie is finished all over the world (at time t_{C} in Fig. 1). Then, this region code even becomes very unfriendly and annoying for a DVD consumer wanting to see the DVD copy of the movie in a relative's or friend's country.

EP 0851418 solves this problem in the following way: next to the region code area, the lead-in area has the area where data about data transfer control is recorded. As practical data, time permission condition data is first recorded. When the time value has elapsed upon manufacturing (the master of) the recording medium, reproduction of data and transfer of data to a host computer are permitted even if the value of the region code area does not coincide with the region code recorded on the recording unit.

### SUMMARY OF THE INVENTION

It is an object of the present invention to provide an optical storage medium where limitation data for limiting access to the content has an effect for a limited period of time, so that, for instance, after said period of time unlimited access to said content is granted.

It is a further object of the present invention to provide a device and a corresponding method of accessing such an optical storage medium.

According to the invention, the object is achieved by an optical storage medium as claimed in claim 1. The change in optical reflectivity and/or transmittance over time may be directly preventing access to the second data area after a period of time or being indirectly used to decide whether access to the at least one portion of the first data area shall be limited according to said limitation data.

The present invention is based on the general idea to utilize a lifetime limited layer/material, such as known from the ez-D, to control the lifetime of the region code or, more generally, the limitation data that limit the access to the content stored in the at least one portion of the first data area. An ez-D disc is supplied in a vacuum-sealed package, and when the package is opened the content on the disc can only be played for a limited time. The ez-D disc works on the principle that a reactive dye is mixed with the adhesive that bonds the DVD layer with a substrate (i.e. polycarbonate layer). The dye goes from a reduced state to an oxidized state when exposed to air or oxygen diffusion. The dye is transparent in the reduced state whereas, in the oxidized state, the dye absorbs wavelengths used for optical writing and reading, thus making the data in the DVD layer unreadable. The governing degradation mechanism is that oxygen diffuses through the substrate and reacts with the reactive dye. Thus, this type of disc provides a limited lifetime or limited use disc, which is achieved by superimposing the data layer with a layer that darkens when in contact with air. Limited lifetime discs are known to be used for applications similar to movie rental, whereby a customer purchases the movie at a gas-station, supermarket or wherever, and can then choose to watch the movie at a later time. However, once the vacuum seal is broken, the limited lifetime disc only has a predetermined play life. For example, the ez-D only has a 48 hours play lifetime. There is no need to return the ez-D disc to the store, which means that the user can simply dispose of the disc. Therefore, CR= new line according to the invention, the region code recorded or stored on the storage medium (such as a BD-ROM or DVD-ROM) substantially gets an expiration time and date. This allows the (e.g. DVD-Video or BD-Video) consumers to watch their movie all around the world when the region code is "expired" (e.g. when its theatrical release is finished), while the profits of the content distributors from its theatrical distribution remain unhurt.

WO2004/031811, US2006/136948, US2003/081521, US2004/037994 and US2005/083829 disclose further examples of limited lifetime or limited use discs.

The state change means that are used according to the present invention for control of the lifetime of the limitation data are adapted to change their optical reflectivity and/or transmittance over time so that, for instance, a reduction of the transmittance and/or an increase of the reflectivity either directly makes the limitation data stored in said second data area unreadable or is indirectly used to decide whether the limitation data shall no longer be read, used or evaluated, so that finally an unlimited access (or an access with less limitations) is available to the content.

Besides a region code, which regionally limits the access to the content, the limitation data can also be some other kind of data that limit the access to content, such as time limitation data, which limit the access for a certain time period or to certain times or dates, personal limitation data I(e.g. a password or PIN), which limit the access to a certain person or a group of persons, or device limitation data, which limit the access to certain devices (e.g. authorized or non-revoked devices). For instance, the limitation data may comprise different keys, such as access key, device keys or personal (private) keys.

According to an embodiment of the invention the limitation data control access to the whole of the content stored in the first data area, but it is also possible that the limitation data control only the access to one or more portions of the content. Further, it is also possible that different limitation data are provided for different portions of the content and that the limitation data have different life-times.

According to a further embodiment the state change means comprise a reactive layer covering the second data area, the reactive layer being provided for determining the length of said limited period of time. In addition, it is preferred that the state change means comprise control means for controlling the length of said limited period of time. Such control means may, for instance, comprise a diffusion barrier layer covering the reactive layer, which diffusion barrier layer may have a predetermined thickness by which the limited period of time is set and/or forms part of a substrate. The diffusion barrier layer may also be arranged to cover at least a portion of a topside and/or at least a portion of an underside of the reactive layer, and the control means may comprise additives added to the reactive layer. In particular, the materials known from the ez-D discs can generally be used in the storage medium according to the present invention as well.

There are also different embodiments regarding the particular layout of the storage medium of the present invention. In particular, in one embodiment the first data area is provided on a first data layer and the second data area is provided on a second data layer, where the first data layer can, for instance, be a BD data layer and the second data layer be a DVD data layer, resulting in some kind of hybrid disc. In another embodiment the first data area and the second data area are separate areas on a common data layer.

Preferably, the state change means is adapted for changing its optical reflectivity and/or transmittance from a value above a predetermined threshold value to a value below said predetermined threshold value. This makes is quite easy to decide whether access to the at least one portion of the first data area shall be limited according to said limitation data or not since only a threshold detector is basically required. According to a further embodiment said predetermined threshold value or an indication value for calculating said predetermined threshold value is stored on the storage medium, i.e. said threshold value is determined in advance, e.g. by the disc manufacturer, since the threshold value is generally different for each disc or, at least, each type of disc.

According to further aspects of the invention there are provided a device and a method for accessing an optical storage medium as claimed in claims 11 and 15 respectively. It shall be understood that these device and a method may have features corresponding to the features defined in the dependent claim for the optical storage medium.

### BRIEF DESCRIPTION OF THE DRAWINGS

For a better understanding of the invention, and to show more clearly how it may be carried into effect, reference will now be made, by way of illustration only, to the following drawings in which:
Fig. 1 illustrates a theatrical distribution and the disc release of a movie in different countries at different times,
Fig. 2 shows a hybrid disc as an embodiment of the storage medium according to the present invention,
Fig. 3 shows a further embodiment of a hybrid disc according to the present invention,
Fig. 4 shows a cross section of another embodiment of a disc according to the present invention,
Fig. 5 shows a top view of the disc shown in Fig. 4,
Fig. 6 shows a cross section of another embodiment of a disc according to the present invention,
Fig. 7 shows an embodiment of a drive according to the present invention,
Fig. 8 shows the molecule and absorption spectrum of Basic Blue,
Fig. 9 shows the molecule and absorption spectrum of Nile Blue,
Fig. 10 shows the molecule and absorption spectrum of MethyleneBlue, and
Fig. 11 shows the transition from leuco methylene blue into methylene blue.

### DETAILED DESCRIPTION OF THE INVENTION

Fig. 2 shows an optical storage medium 20 according to the present invention. The optical storage medium 20 comprises a first data layer 21, for example a BD data layer (for example a BD-ROM, BD-R or a BD-RE layer). In addition, the optical storage medium 20 comprises a second data layer 23, for example a DVD data layer(for example DVD-ROM/R/RW/RAM/±R/±RW). The second data layer 23 is bonded to a substrate 25 using a third layer 27. The third layer 27, which can be an ez-D layer, comprises an adhesive combined with a reactive agent. The reactive agent in the third layer 27 acts to provide a limited lifetime to the data contained in the second layer 23. Preferably, the optical storage medium 20 also comprises a cover layer 29, for example a polycarbonate layer for covering the first data layer 21, and a substrate 31, for example a polycarbonate layer.

Such a storage medium is, generally, also called a hybrid disc. It will be appreciated that many different combinations of hybrid discs are possible, having different combinations of BD data layers, DVD data layers and/or CD data layers. The general idea with hybrid discs is that they allow different types of information and content to be separated. In the hybrid disc 20, data such as movies and software can be made available in the BD data layer 21 and the DVD data layer 23, which means that the hybrid disc 20 can be played in the next generation BD players (using the BD data layer 21) or in existing DVD players (using the DVD data layer 23).

The second data layer 23 (i.e. having a limited lifetime) contains limitation data 24 (e.g. a region code) for controlling access to at least a portion of the data contained on the first data layer 21. In this way, the limitation data provides a link between the information on the first data layer 21 and the limited lifetime information contained on the second data layer 23. Preferably, the table of content of the first data layer 21 should indicate that the limitation data 24 (e.g. the region code) is located in the second data layer 23. The limitation data will become unreadable (in other words, in case of a region code as limitation data, the first data layer will become region code free) after a predetermined time. This is, for instance, achieved in that the reactive agent goes from transparent to blue upon oxidation. Hence, the lifetime of the lifetime limited layer is controlled by the amount of oxygen that reaches it.

The invention has the advantage that a small amount of data stored in the second data layer 23 (DVD data layer) can be used to interact with the large amount of data stored in the first data layer 21 (BD data layer).

As mentioned above, preferably, the limitation data stored on the second data layer 23 can be used to control access to only a portion of the data stored in the first data layer 21. This has the advantage that access to only a selected part of the information contained in the first layer 21 can be limited for a certain time and can thereafter be less limited or granted freely.

Alternatively, the limitation data stored on the second data layer 23 can be used to control access to all of the data stored on the first data layer 21. The invention therefore has the advantage of enabling either a portion or all of the data in the first data layer 21 to have a limited access for a certain time.

It is noted that the reactive agent used in the third layer 27 can be any reactive agent that has the effect of preventing access to the data stored on the second layer 23 after a predetermined amount of time. It is well known to use various reactive dyes and photo-bleaching agents for this purpose.

Currently, the lifetime of commercial ez-D is 48 hours. According to another aspect of the invention, the lifetime of the disc can be controlled or tuned. This is achieved by providing means for controlling the aging mechanism such that it has a tunable lifetime. Controlling the lifetime can be done in two ways. The most straightforward way is to change the composition of the dye or to include oxygen diffusions barriers in the stack. A schematic picture of the oxygen diffusion layers in the stack of layers of an optical storage medium is shown below.

Fig. 3 shows a preferred embodiment for tuning the lifetime of the second data layer 23. In a similar manner to Fig. 2, the optical storage medium 40 comprises a first data layer 21, for example a BD data layer, and a second data layer 23, for example a DVD data layer. The second data layer 23 is bonded to a substrate 25 using a third layer 27, comprising an adhesive combined with a reactive agent.

In addition, according to this aspect of the invention, there is provided a diffusion layer 33. The diffusion layer 33 acts as a barrier, and can be configured to tune the lifetime of the second data layer 23. For example, the diffusion layer 33 can be a silicon-nitride layer for limiting the oxygen diffusion or water diffusion from penetrating the reactive layer 27. Furthermore, in addition to having a diffusion layer 33 covering the "topside" of the reactive layer 27, a diffusion layer 35 may also be provided for limiting oxygen diffusion or water diffusion penetrating the reactive layer 27 from the "underside". It will be appreciated that other possibilities are covered by the invention, such as the provision of a diffusion layer 35 without a diffusion layer 33, or in which each diffusion layer only covers part of the reactive layer 27. With the latter, it is possible that one portion of the second data layer 23 (for example the portion 24 containing the limitation data to the first data layer 21) becomes inaccessible prior to another portion of the second data layer 23.

The diffusion layers 33 and/or 35 act to limit the oxygen or moisture diffusion from air to the aging or reactive layer 27, and thereby limit the oxygen diffusion. According to one embodiment, the lifetime is controlled by varying the thickness of the diffusion layer 33 and/or 35. In other words, the thickness of the diffusion layer 33 and/or 35 controls the amount of oxygen or moisture that reaches the lifetime limited ageing layer 27. Alternatively, the lifetime can also be tuned by varying the amount of reactive additives in the adhesive layer.

Although the embodiment above has been described as having separate diffusion layers 33 and/or 35, it is noted that the diffusion layers 33 and/or 35 may form part of the polycarbonate substrates 25 and/or 31, respectively. In other words, according to this particular embodiment, the aging is controlled by controlling the diffusion of oxygen or moisture through the disc by tuning the porosity or permeability of the polycarbonate substrate. In this manner, the time period for which access to (portions of) the content stored on first data layer by the limitation data (e.g. the region code) can be controlled during manufacturing. In other words, once manufactured with a particular diffusion layer 33 and/or 35, the limitation data has a set lifetime (which can differ from a separate disc manufactured with different diffusion layers).

It will be appreciated that the invention also embraces other methods of tuning the lifetime of the second data layer 23. For example, spin-coated lacquer layers can be applied to a disc at any interface, even on the surface of the disc. Lacquer layers (for example spin-coated UV curable resin) are often used in optical disc production as an adhesive or as an oxygen and moisture diffusion barrier.

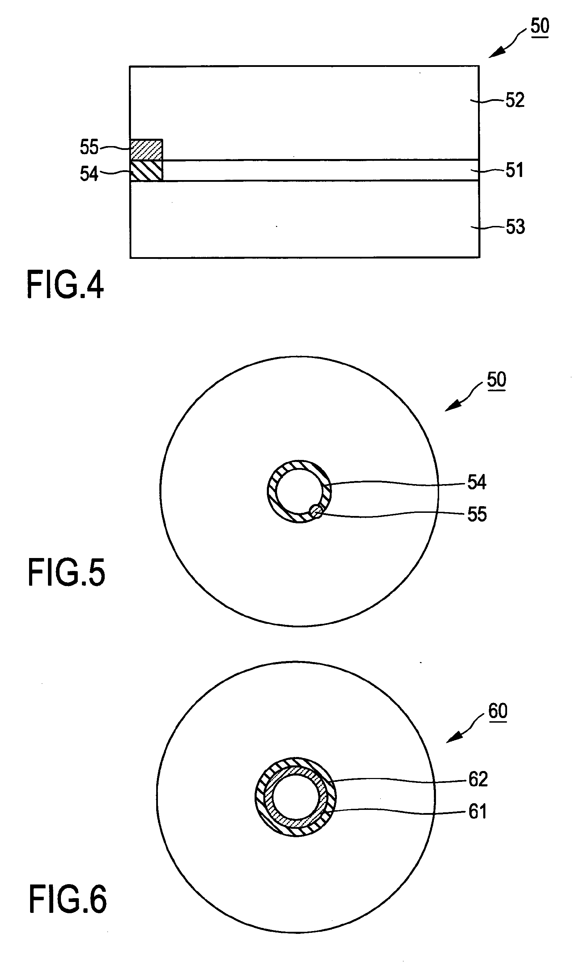

Further embodiments of optical storage media, e.g. a DVD-ROM or a BD-ROM, according to the present will now be briefly explained with reference to Figs. 4 to 6. In this embodiment, only the region code, or part of the disc containing the region code, is buried under a lifetime-limited layer as is shown in Figs. 4 and 5 in which a cross section (Fig. 4) and a top view of the same disc 50 having a data and reflective layer 51, a cover layer 52 and a substrate layer 53 are shown. The region code in DVD is stored in the lead-in zone 54, which is located in the innermost radius of the disc 50, and hence the adhesive layer 55 containing a reactive agent is applied locally for that specific radius only.

Alternatively, as is shown in the embodiment of the disc 60 shown in Fig. 6, the lifetime-limited layer 61 is applied to the whole radius of the lead-in zone, or parts of the lead-in zone, (not shown, lies directly under the layer 61) with a region code, whereas a secondary or redundant lead-in zone, or parts of the lead-in zone, 62, which typically exists in addition to the original lead-in zone in order to avoid losing various important disc parameters, has no lifetime-limited layer coated but has, for instance, a region-free region code, which does not restrict the access to the content. In this case, obviously, the original region code becomes inaccessible after a pre-determined time, and then the disc becomes region code free because of the secondary or redundant lead-in zone with region-free region code.

In the table of contents (or at some other predetermined location) of the disc it can be specified that the drive first should search for a region code in at a specific location where the region code lock is placed (this area preferably also has the lifetime limited layer). If the drive can not find the region code at that location (e.g. when the lifetime limited layer makes it impossible to read it out), then the drive should look for the region code at another location (e.g. a predetermined third data area, where the region-free code is located) or should be allowed to access the content freely without limitations (i.e. without limitation by any region code).

The lifetime limitation has so far been assumed to happen in a layer, however, the mechanism for degradation could just as easily happen in the polycarbonate substrate (DVD) or in the cover sheet (BD). For instance, Leuco Methylene Blue could be added to in the polycarbonate substrate or in the cover sheet.

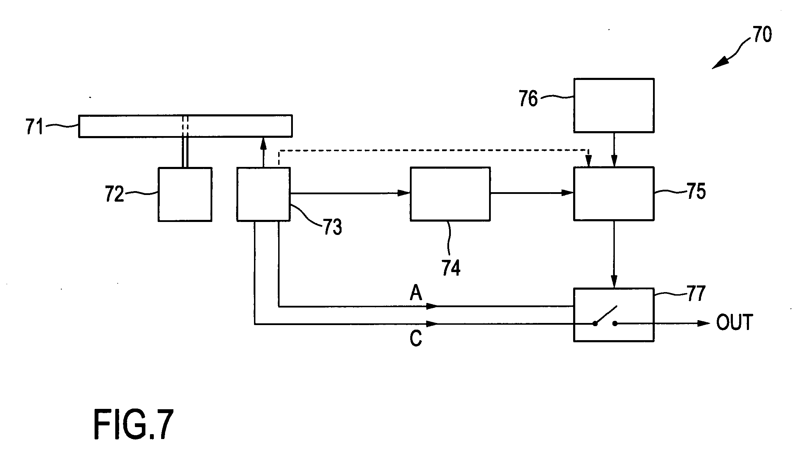

Now, a further embodiment of the present invention will be explained by use of the block diagram of an embodiment of a drive according to the present invention shown in Fig. 7. In BD, there are two values for the track pitch (TP) defined, depending on the region. All tracks from the beginning of the disc up to radius R=23.197 mm have a TP=0.35. For R=23.235 mm and larger TP=0.32. Between R=23.197 mm and R=23.235 mm there is a transition zone, which is called Protection Zone 2. Protection Zone 2 is only used as the changeover area for the track pitch. Protection Zone 2 consists of 100 tacks and contains no information or data. Therefore, Protection Zone 2 is an example of a region on the disc that could be used for the example described in this embodiment. In the current BD standard all data in the Protection Zone 2 is set to 00h.

According to this embodiment of the present invention, however, it is made use of this area, which is approximately 40 µm wide. The lifetime limited layer (LLL) is located exactly on top of this protection zone, such that the 23.197 < R_{LLL} < 23.235 mm. The reflection of the LLL is now such that the reflection of this layer does not go to zero, but decreases to a certain value, e.g. 40 to 80% of the original one.

The idea is now the following. Assuming that somehow/somewhere in the disc (which is, for instance but not necessarily, a BD disc) a region code is added, the drive 70 first looks if there is a region code present on the disc 71 which is rotated by a spindle motor 72 for reading by a reading unit 73. If the region code is absent or the region code has a value indicating that all regions can play the disc (e.g. region code = 0, like in DVD), then the drive 70 ignores the protection zone 2. If the region code is present (e.g. region code = 2), then the drive also measures the reflection value of the protection zone 2 by use of a measuring unit 74. The measured reflection value is then checked against a threshold value (provided from a memory 76 or read from the disc 71) in a threshold unit 75. If the reflection is below a certain threshold value (for example, α x reflection of the rest of the disc), then it is reading a disc 71 which has a certain age, thus it knows that the region code can be ignored. However, if the reflection is above the threshold level, then it will keep the value of the region code as read out before. This information obtained by the threshold unit 75 is evaluated by a control unit 77, which basically controls the output of the read content C based on the limitation data A (the region code) such that either the content C is output or not depending on whether the limitation data shall be ignored or not.

Thus, basically the following steps are carried out by the drive 70:
1. Read out region code (RC);
2. Determine the reflection of the protection zone 2 of the disc (Rdisc);
3. If RC=0, then read out data and ignore protection zone 2 / region code;
4. If RC <> 0, then measure reflection protection zone 2 (Refl2);
5. If Refl2 ≤ α x Rdisc then set RC=0;
6. If Refl2 > α x Rdisc then keep current value of RC.

The value of α can be a certain constant for all discs (e.g. of the same type) and thus stored in a memory 76 of the drive), or its value can be stored somewhere on the disc, such that some disc are protected a longer time than others.

An advantage of this method is that legacy drives do not need to know what is happening in the protection zone 2. They will always play the disc if the region code has its right value, and will also not be influenced by the change of reflection in the protection zone 2. Only drives with the right firmware will know what to do with the reflection information. Alternatively, discs with no LLL can also be played on every drive.

The embodiment described above measures the reflectivity of a protection zone 2, however the same idea of measuring the reflectivity can equally well applied to measuring the reflectivity from other, predetermined portions of a disc, e.g. specific portions provided for this purpose or not used for any other purpose. Further, the idea can generally be applied on any type of disc, not only on a BD disc.

Further, according to the embodiment shown in Fig. 7 the content is either output or not. However, other (intermediate) limitations are also possible. For instance, instead of a region code other limitation data can be used, such as access keys, time limitations or other copyright protection data (e.g. a counter how often the content can be reproduced). The measured reflection value could then be measured and compared with not only one threshold values but to several (non-identical) threshold values so that based thereon the limitations could be step by step reduced the lower the measured reflectivity value is. For instance, if the reflection is 80-60% of the original reflection value then access is allowed or denied to certain files, predetermined, for instance, in the table of content. When the reflection is between 60-40% of the original value then access to other files, predetermined, for instance, in the table of content is changed, and so on.

According to the above described embodiments it is assumed that the lifetime limited layer goes from a state where the limitation data (e.g. the region code) can be read to a state where the limitation data can not be read anymore. In a similar way it is possible to find a state change means, e.g. employing a dye, that goes from unreadable state to a state where the limitation data can be read. Then, in the case of the embodiment of the drive illustrated in Fig. 7, the reflectivity of the protection zone increases over time, i.e. it will be determined if the reflectivity has been increased and is above a certain threshold to make the decision whether the limitation data shall be applied or not.

The invention can be applied, but not limited, to DVD-Video (or BD-Video) with lifetime-limited region code using a ez-D or lifetime-limited layer/material. This allows consumers to watch their movie all around the world when its theatrical release is finished, while the profits of the content distributors from its theatrical distribution remain unhurt. But a number of further uses of the invention are possible. For instance, the invention enables to license a software now, but make it only usable after a certain period, for example some weeks or months. Further, sensitive documents can, for instance, only be made accessible after a certain period of time, or the number of people that get access to the document can be increased step by step over time.

In the following some materials shall be explained which can be used according to the present invention to provide the effect of changing its optical reflectivity and/or transmittance over time, i.e. which can be used for the state change means according to the present invention. In particular, dyes or indicators shall be mentioned that are blue (high absorption in the range of 600-700nm), but gradually turn colorless or red upon oxidation. Particularly, oxazines (containing a N and an O atom in the second ring) and thiazines (containing a N and a S atom in the second ring) are suitable for this purpose. In the following, a few examples thereof shall be briefly explained.

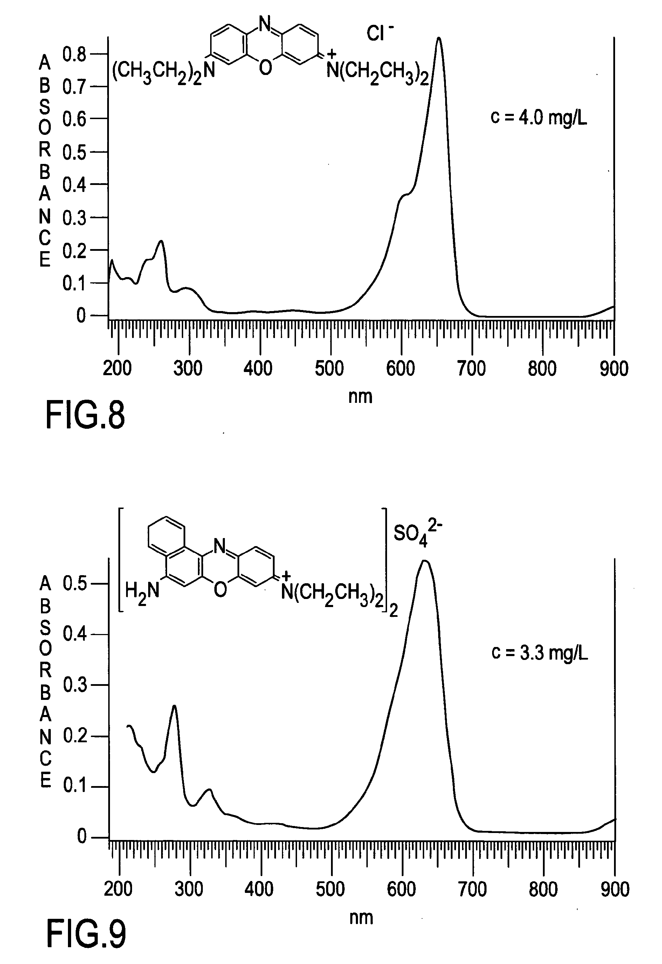

A first example is Basic Blue, whose molecule and absorption spectrum are shown in Fig. 8. The molecule is likely to be susceptible to oxidative deethylation with the concomitant formation of polychromatic end products.

A second example is Nile Blue, whose molecule and absorption spectrum are shown in Fig. 9. It is known that in a solution of water Nile Blue gradually transforms in Nile Red: the NH₂-group is replaced by =O. The absorption peak shifts from 650nm to 550nm. This also occurs when water is diffusing through the polycarbonate substrate to the dye layer, so that this molecule is a candidate for the aimed application.

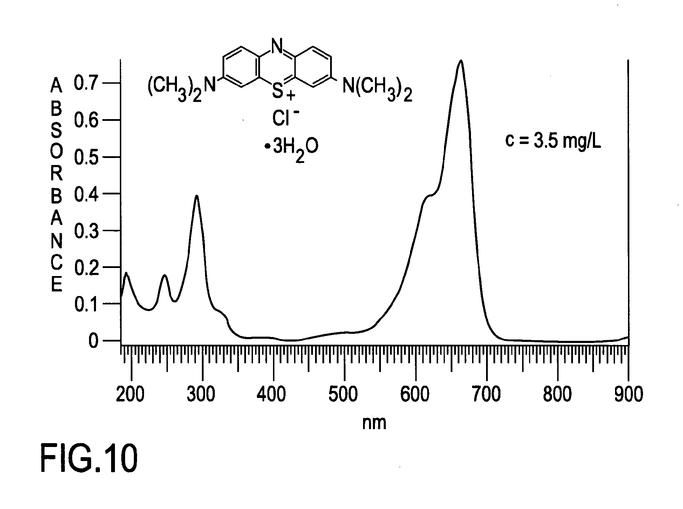

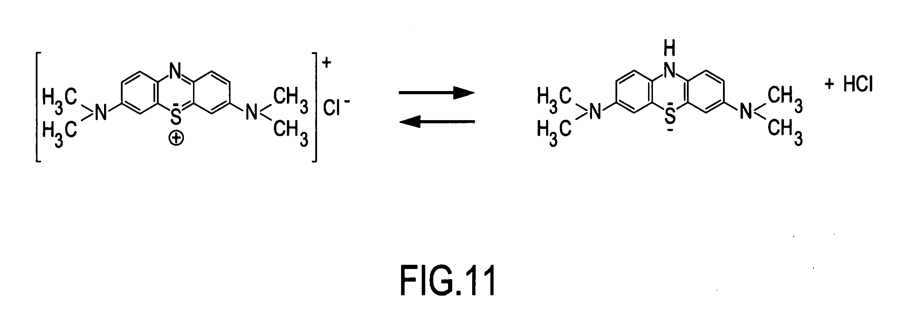

A third example is Methylene Blue, whose molecule and absorption spectrum are shown in Fig. 10. This molecule readily forms Methylene Azures by oxidative demethylation. Also, spontaneous oxidation occurs in Methylene Blue solutions, resulting in the formation of Polychrome Methylene Blue. Leuco Methylene Blue (colorless) is used in the ez-D disc (see also WO 2004/010426 A2), which forms Methylene Blue (blue) upon oxidation. The coloring mechanism is then based on the oxidation of (colorless) leuco methylene blue into (blue) methylene blue as shown in Fig. 11.

Leuco methylene blue is a well-known indicator agent in redox-based titrations. This transformation is controlled by another oxidation reaction, viz. the transition of Sn(II) 2-ethyl hexanoate into Sn(IV) 2-ethyl hexanoate. This latter conversion is not an equilibrium reaction, as opposed to the methylene blue redox couple. The oxidation potential of Sn(II) 2-ethyl hexanoate is much lower than that of leuco methylene blue. Consequently, in the presence of an oxidant (oxygen from the ambient, H₂O, etc.) the Sn(II) salt will be oxidized first until all Sn(II) has transformed into Sn(IV), before the coloration of leuco methylene blue will start. The concentration of Sn(II) 2-ethyl hexanoate in the adhesive/dye layer will determine the incubation time before the disk turns black. The black color results from the combination with the red polycarbonate substrate: once the blue methylene blue is formed, the disk will be no longer transparent to 670nm light and hence be unreadable. The well-controllable incubation time implies that the oxygen supply to the adhesive layer proceeds mainly through the (red) polycarbonate substrate rather than via the edge of the disk, where this layer is directly exposed to the ambient. Polycarbonate is known to be fairly accessible for air and moisture.

More details about such materials can be found in The Sigma-Aldrich Handbook of Stains, Dyes and Indicators, F.J. Green, Aldrich Chemical Company, Milwaukee, Wisconsin (1990).

Another useful approach is to use so-called invisible ink. There are various kinds, the most useful ones are blue or black directly after writing, but fade away in about two days (due to an oxidation reaction). Such invisible inks are, for instance, described at http://www.pimall.com/nais/dispen.html.

It shall be noted that, when referring to a particular layer as being a BD layer or a DVD layer, it will be appreciated that such references refer to these layers as being the reflective layer for the format concerned.

It is also noted that while the preferred embodiments show a preferred layout for the various layers in the optical disc, these layers may be interchanged or arranged differently as appropriate. For example, although the diffusion barrier layers 33 and 35 are shown as being arranged directly next to the topside and the underside of the reactive layer 27, the diffusion barrier layer 35 could equally be placed on the underside of the second data layer 23, since this would still limit oxygen or moisture from reaching the reactive layer 27. In a similar manner, the diffusion barrier layer 33 could also be located elsewhere to the topside of the reactive layer 27. It will be appreciated that the term "topside" means the side that is located towards the laser source, whereas the term "underside" means the side located away from the laser source.

Further, there will be other embodiments of drives employing the present invention than the embodiment shown in Fig. 7. For instance, in one embodiment the drive may essentially comprise only a spindle motor 72, a reading unit 73 and a control unit 77, but not the units 74, 75 and 76. The control unit 77 may be adapted such that it controls the reading unit 73 to read, in case access to the second data area (e.g. table of contents) storing the limitation data (e.g. the region code) is prevented, default limitation data (e.g. a region-free region code) from a third data area (e.g. a default table of contents) storing said default limitation data for use instead of the limitation data stored in the second data area or to read-out no limitation data. The control unit 77 may then accordingly control the access to the content stored in said first data area on the disc 71 according to the read limitation data or no limitation data, respectively.

The present invention can be summarized as follows. An optical storage medium 20 is proposed comprising a first data area 21 for storing content and a second data area 23 for storing limitation data 24 for limiting access to at least a portion of the first data area. It is desired that the period of time for which access to content stored on the storage medium is limited, such that, for instance, after said period of time unlimited access to said content is granted. To achieve this a state change means 27 is provided on the storage medium, adapted for changing its optical reflectivity and/or transmittance over time, said change directly preventing access to the second data area after a limited period of time or being indirectly used to decide whether access to the at least one portion of the first data area shall be limited according to said limitation data.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfill the functions of several units recited in the claims. Any reference signs in the claims shall not be construed so as to limit their scope.

## Claims

1. An optical storage medium (20) comprising:
- a first data area (21) for storing content;
- a second data area (23) for storing limitation data (24) for limiting access to at least a portion of the first data area, whereby the access to said portion of the first data area is controlled in dependence of the limitation data if the limitation data can be read, or, independently of the limitation data, if the limitation data can not be read,
- a state change means (27, 33, 35) adapted for changing the optical reflectivity and/or transmittance over time of said second data area.

2. An optical storage medium as claimed in claim 1, wherein said state change means comprise a reactive layer (27) covering the second data area.

3. An optical storage medium as claimed in claim 2, wherein said state change means comprise control means (33, 35) for controlling the rate at which state change means are changing its optical reflectivity and/or transmittance.

4. An optical storage medium as claimed in claim 3, wherein said control means comprises a diffusion barrier layer (33, 35) covering the reactive layer.

5. An optical storage medium as claimed in claim 4, wherein said diffusion barrier layer (33, 35) has a predetermined thickness by which said rate is set.

6. An optical storage medium as claimed in claim 4 or 5, wherein the diffusion barrier layer (33, 35) forms part of a substrate.

7. An optical storage medium as claimed in claim 4 or 5, wherein the diffusion barrier layer (33, 35) is arranged to cover at least a portion of a topside and/or at least a portion of an underside of the reactive layer (27).

8. An optical storage medium as claimed in claim 3, wherein said control means comprises additives added to the reactive layer (27).

9. An optical storage medium as claimed claim 1, wherein said state change means (27) is adapted for changing its optical reflectivity and/or transmittance from a value above a predetermined threshold value to a value below said predetermined threshold value.

10. An optical storage medium as claimed claim 1, further comprising a third data area (62) for storing default limitation data for use instead of the limitation data stored in the second data area (61) if access to said second data area is prevented by said state change means.

11. A device (70) for accessing an optical storage medium (20; 71) comprising:
- a first data area (21) for storing content;
- a second data area (23) for storing limitation data (24) for limiting access to at least a portion of the first data area,
- a state change means (27, 33, 35) adapted for changing the optical reflectivity and/or transmittance over time of said second data area,
the device comprising:
- a limitation data read-out unit (73) for tentatively reading the limitation data (24),
- a control unit (77) for controlling access to the content in dependence of the limitation data if the limitation data can be read, or, independently of the limitation data, if the limitation data can not be read.

12. A device as claimed in claim 11, wherein the control unit is adapted to access the content without limitations if the limitation data are not readable.

13. A device as claimed in claim 11, wherein the control unit is adapted to access the content in dependence of default limitation data if the limitation data are not readable.

14. A device as claimed in claim 11, comprising a measuring unit (74) for measuring the optical reflectivity and/or transmittance of the state change means (27, 33, 35), and a threshold unit (75) for determining whether the measured value of the optical reflectivity and/or transmittance is above a predetermined threshold value, thereby assessing if limitation data can be read.

15. A method (70) for accessing an optical storage medium (20; 71) comprising:
- a first data area (21) for storing content;
- a second data area (23) for storing limitation data (24) for limiting access to at least a portion of the first data area,
- a state change means (27, 33, 35) adapted for changing the optical reflectivity and/or transmittance over time of said second data area,
the method comprising:
- attempting to read the limitation data (24),
- controlling access to the content in dependence of the limitation data if the limitation data can be read, or, independently of the limitation data, if the limitation data can not be read.

16. A method according to claim 15, further comprising:
- measuring the optical reflectivity and/or transmittance of the state change means (27, 33, 35),
- determining whether the measured value of the optical reflectivity and/or transmittance is above a predetermined threshold value, thereby assessing if limitation data can be read.

17. A method according to claim 16, wherein if limitation data can not be read the step of attempting to read limitation data is skipped.

## Patentansprüche

1. Optisches Speichermedium (20), das Folgendes umfasst:
- ein erstes Datengebiet (21) zum Speichern von Inhalt,
- ein zweites Datengebiet (23) zum Speichern von Beschränkungsdaten (24) zum Beschränken des Zugriffs auf wenigstens einen Teil des ersten Datengebietes, wobei der Zugriff auf den genannten Teil des ersten Datengebietes in Abhängigkeit von den Beschränkungsdaten gesteuert wird, wenn die Beschränkungsdaten ausgelesen werden können, oder unabhängig von den Beschränkungsdaten, wenn die Beschränkungsdaten nicht ausgelesen werden können,
- ein Zustandsänderungsmittel (27, 33, 35), vorgesehen zum Ändern des optischen Reflektionsvermögens und/oder der Transmission des zweiten Datengebietes im Laufe der Zeit.

2. optisches Speichermedium nach Anspruch 1, wobei die genannten Zustandsänderungsmittel eine reaktive Schicht (27) aufweisen, die das zweite Datengebiet bedeckt.

3. Optisches Speichermedium nach Anspruch 2, wobei die genannten Zustandsänderungsmittel Steuermittel (33, 35) aufweisen, und zwar zur Steuerung der Frequenz, mit der die Zustandsänderungsmittel das optische Reflexionsvermögen und/oder die Transmission ändern.

4. Optisches Speichermittel nach Anspruch 3, wobei das genannte Steuermittel eine Diffusionssperrschicht (33, 35) aufweist, welche die reaktive Schicht bedeckt.

5. Optisches Speichermittel nach Anspruch 4, wobei die genannte Diffusionssperrschicht (33, 35) eine vorbestimmte Dicke hat, wodurch die genannte Frequenz eingestellt wird.

6. Optisches Speichermedium nach Anspruch 4 oder 5, wobei die Diffusionssperrschicht (33, 35) einen Teil eines Substrats bildet.

7. Optisches Speichermedium nach Anspruch 4 oder 5, wobei die Diffusionssperrschicht (33, 35) dazu vorgesehen ist, wenigstens einen Teil einer Oberseite und/oder wenigstens einen Teil der Unterseite der reaktiven Schicht (27) zu bedecken.

8. Optisches Speichermedium nach Anspruch 3, wobei das genannte Steuermittel der reaktiven Schicht (27) zugesetzte Zusatzstoffe aufweist.

9. Optisches Speichermedium nach Anspruch 1, wobei das genannte Zustandsänderungsmittel (27) zum Ändern des optischen Reflexionsvermögens und/oder der Transmission von einem Wert über einem vorbestimmten Schwellenwert in einen Wert unterhalb des genannten vorbestimmten Schwellenwertes.

10. Optisches Speichermedium nach Anspruch 1, das weiterhin ein drittes Datengebiet (62) aufweist, und zwar zur Speicherung vorgegebener Beschränkungsdaten zur Verwendung anstelle der in dem zweiten Datengebiet (61) gespeicherten Beschränkungsdaten, wenn Zugriff auf das genannte zweite Datengebiet durch das genannte Zustandsänderungsmittel verhindert wird.

11. Vorrichtung (70) zum Zugreifen auf ein optisches Speichermedium (20; 71), das Folgendes umfasst:
- ein erstes Datengebiet (21) zum Speichern von Inhalt,
- ein zweites Datengebiet (23) zum Speichern von Beschränkungsdaten (24) zum Beschränken des Zugriffs auf wenigstens einen Teil des ersten Datengebietes,
- ein Zustandsänderungsmittel (27, 33, 35) zum Ändern des optischen Reflexionsvermögens und/oder der Transmission im Laufe der Zeit des genannten zweiten Datengebietes,
wobei diese Vorrichtung Folgendes umfasst:
- eine Beschränkungsdatenausleseeinheit (73) zum versuchsweisen Auslesen der Beschränkungsdaten (24),
- eine Steuereinheit (77) zur Steuerung des Zugriffs auf den Inhalt, und zwar in Abhängigkeit von den Beschränkungsdaten, wenn die Beschränkungsdaten ausgelesen werden können, oder unabhängig von den Beschränkungsdaten, wenn die Beschränkungsdaten nicht ausgelesen werden können.

12. Vorrichtung nach Anspruch 11, wobei, wenn die Beschränkungsdaten nicht ausgelesen werden können, die Steuereinheit zum unbeschränkten Zugreifen auf den Inhalt vorgesehen ist.

13. Vorrichtung nach Anspruch 11, wobei die Steuereinheit dazu vorgesehen ist, auf den Inhalt zuzugreifen, und zwar in Abhängigkeit von vorgegebenen Beschränkungsdaten, wenn die Beschränkungsdaten nicht ausgelesen werden können.

14. Vorrichtung nach Anspruch 1, mit einer Messeinheit (74) zum Messen des optischen Reflexionsvermögens und/oder der Transmission der Zustandsänderungsmittel (27, 33, 35), und mit einer Schwelleneinheit (75) zur Ermittlung, ob der gemessene Wert des optischen Reflexionsvermögens und/oder der Transmission über einen vorbestimmten Schwellenwert liegt, dabei abwägend, ob Beschränkungsdaten ausgelesen werden können.

15. Verfahren (70) zum Zugreifen auf ein optisches Speichermedium (20; 71), das Folgendes umfasst:
- ein erstes Datengebiet (21) zum Speichern von Inhalt,
- ein zweites Datengebiet (23) zum Speichern von Beschränkungsdaten (24) zum Beschränken des Zugriffs auf wenigstens einen Teil des ersten Datengebietes,
- ein Zustandsänderungsmittel (27, 33, 35), vorgesehen zum Ändern des optischen Reflexionsvermögens und/oder der Transmission des zweiten Datengebietes,
wobei das Verfahren die nachfolgenden Verfahrensschritte umfasst:
- das Versuchen die Beschränkungsdaten (24) auszulesen,
- das Steuern des Zugriffs auf den Inhalt, und zwar in Abhängigkeit von den Beschränkungsdaten, wenn die Beschränkungsdaten ausgelesen werden können, oder unabhängig von den Beschränkungsdaten, wenn die Beschränkungsdaten nicht ausgelesen werden können.

16. Verfahren nach Anspruch 15, wobei das Verfahren weiterhin die nachfolgenden Verfahrensschritte umfasst:
- das Messen des optischen Reflexionsvermögens und/oder der Transmission der Zustandsänderungsmittel (27, 33, 35),
- das Ermitteln, ob der gemessene Wert des optischen Reflexionsvermögens und/oder der Transmission über einem vorbestimmten Schwellenwert liegt, dabei abwägend, ob Beschränkungsdaten ausgelesen werden können.

17. Verfahren nach Anspruch 16, wobei der Verfahrensschritt des Versuchs, Beschränkungsdaten auszulesen übersprungen wird, wenn Beschränkungsdaten nicht ausgelesen werden können.

## Revendications

1. Support de stockage optique (20) comprenant :
- une première zone de données (21) destinée à stocker un contenu ;
- une deuxième zone de données (23) destinée à stocker des données de limitation (24) pour limiter un accès à au moins une partie de la première zone de données, moyennant quoi l'accès à ladite partie de la première zone de données est commandé de façon dépendante des données de limitation si les données de limitation peuvent être lues, ou, de façon indépendante des données de limitation, si les données de limitation ne peuvent pas être lues,
- un moyen de changement d'état (27, 33, 35) adapté pour changer la réflectivité et/ou transmission optique, avec le temps, de ladite deuxième zone de données.

2. Support de stockage optique selon la revendication 1, dans lequel ledit moyen de changement d'état comprend une couche réactive (27) recouvrant la deuxième zone de données.

3. Support de stockage optique selon la revendication 2, dans lequel ledit moyen de changement d'état comprend des moyens de commande (33, 35) destinés à commander la vitesse à laquelle le moyen de changement d'état change sa réflectivité et/ou transmission optique.

4. Support de stockage optique selon la revendication 3, dans lequel lesdits moyens de commande comprennent une couche barrière de diffusion (33, 35) recouvrant la couche réactive.

5. Support de stockage optique selon la revendication 4, dans lequel ladite couche barrière de diffusion (33, 35) possède une épaisseur prédéterminée par laquelle ladite vitesse est réglée.

6. Support de stockage optique selon la revendication 4 ou 5, dans lequel la couche barrière de diffusion (33, 35) fait partie d'un substrat.

7. Support de stockage optique selon la revendication 4 ou 5, dans lequel la couche barrière de diffusion (33, 35) est agencée pour recouvrir au moins une partie d'un côté supérieur et/ou au moins une partie d'un côté inférieur de la couche réactive (27).

8. Support de stockage optique selon la revendication 3, dans lequel lesdits moyens de commande comprennent des additifs ajoutés à la couche réactive (27).

9. Support de stockage optique selon la revendication 1, dans lequel ledit moyen de changement d'état (27) est adapté pour changer sa réflectivité et/ou transmission optique d'une valeur supérieure à une valeur seuil prédéterminée à une valeur inférieure à ladite valeur seuil prédéterminée.

10. Support de stockage optique selon la revendication 1, comprenant en outre une troisième zone de données (62) destinée à stocker des données de limitation par défaut à utiliser à la place des données de limitation stockées dans la deuxième zone de données (61) si l'accès à ladite deuxième zone de données est empêché par ledit moyen de changement d'état.

11. Dispositif (70) pour accéder à un support de stockage optique (20 ; 71) comprenant :
- une première zone de données (21) destinée à stocker un contenu ;
- une deuxième zone de données (23) destinée à stocker des données de limitation (24) pour limiter un accès à au moins une partie de la première zone de données,
- un moyen de changement d'état (27, 33, 35) adapté pour changer la réflectivité et/ou transmission optique, avec le temps, de ladite deuxième zone de données,
le dispositif comprenant :
- une unité de lecture de données de limitation (73) destinée à lire de façon provisionnelle les données de limitation (24),
- une unité de commande (77) destinée à commander l'accès au contenu de façon dépendante des données de limitation si les données de limitation peuvent être lues, ou, de façon indépendante des données de limitation, si les données de limitation ne peuvent pas être lues.

12. Dispositif selon la revendication 11, dans lequel l'unité de commande est adaptée pour accéder au contenu sans limitations si les données de limitation ne sont pas lisibles.

13. Dispositif selon la revendication 11, dans lequel l'unité de commande est adaptée pour accéder au contenu de façon dépendante de données de limitation par défaut si les données de limitation ne sont pas lisibles.

14. Dispositif selon la revendication 11, comprenant une unité de mesure (74) destinée à mesurer la réflectivité et/ou transmission optique du moyen de changement d'état (27, 33, 35), et une unité de seuil (75) destinée à déterminer si la valeur mesurée de la réflectivité et/ou transmission optique est supérieure à une valeur seuil prédéterminée, obtenant ainsi un accès si les données de limitation peuvent être lues.

15. Procédé (70) pour accéder à un moyen de stockage optique (20 ; 71) comprenant :
- une première zone de données (21) destinée à stocker un contenu ;
- une deuxième zone de données (23) destinée à stocker des données de limitation (24) pour limiter un accès à au moins une partie de la première zone de données,
- un moyen de changement d'état (27, 33, 35) adapté pour changer la réflectivité et/ou transmission optique, avec le temps, de ladite deuxième zone de données,
le procédé comprenant les étapes consistant à :
- essayer de lire les données de limitation (24),
- commander l'accès au contenu de façon dépendante des données de limitation si les données de limitation peuvent être lues, ou, de façon indépendante des données de limitation, si les données de limitation ne peuvent pas être lues.

16. Procédé selon la revendication 15, comprenant en outre les étapes consistant à :
- mesurer la réflectivité et/ou transmission optique du moyen de changement d'état (27, 33, 35),
- déterminer si la valeur mesurée de la réflectivité et/ou transmission optique est supérieure à une valeur seuil prédéterminée, obtenant ainsi un accès si les données de limitation peuvent être lues.

17. Procédé selon la revendication 16, dans lequel, si les données de limitation ne peuvent pas être lues, l'étape consistant à essayer de lire les données de limitation n'est pas réalisée.
